# EUROPÄISCHE PATENTSCHRIFT

(11) **EP 2 839 080 B1**
(45) Veröffentlichungstag und Bekanntmachung des Hinweises auf die Patenterteilung: **13.07.2016**
(21) Anmeldenummer: 13718830.6
(22) Anmeldetag: 19.04.2013
(51) Int. Cl.: E02B 1/00, E02B 5/08

(54) **FISCHSCHUTZSEILRECHEN**
CABLE SCREEN FOR FISH-PROTECTION PURPOSES
GRILLE À CÂBLES POUR LA PROTECTION DES POISSONS

(30) Priorität: 19.04.2012 DE 102012206504
(43) Veröffentlichungstag der Anmeldung: 25.02.2015
(73) Patentinhaber: Universität Innsbruck, 6020 Innsbruck (AT)
(72) Erfinder: AUFLEGER, Markus, 82377 Penzberg (DE)
(74) Vertreter: m patent group
(86) Internationale Anmeldenummer: PCT/EP2013/058139
(87) Internationale Veröffentlichungsnummer: WO 2013/156581

(56) Entgegenhaltungen:
- WO-A2-2009/023450
- AU-B2- 2002 318 764
- GB-A- 2 478 862
- GB-A- 191 423 489
- US-A1- 2008 298 899
- US-A1- 2010 242 851

## Beschreibung

Die vorliegende Erfindung betrifft eine Vorrichtung zum Rückhalt und zur Ableitung von Fischen in Wasserkörpern, eine Verwendung einer solchen Vorrichtung in einem Wasserkörper sowie ein Verfahren zum Rückhalten von Fischen in einem Wasserkörper.

### Stand der Technik

An den Einläufen zu Wasserkraftanlagen werden Rechen angeordnet. Eine wesentliche Aufgabe dieser Rechen ist der Fischschutz. Im Sinne einer mechanischen Barriere sollen die Rechen die Fische davon abhalten, auf ihrer flussabwärts gerichteten Wanderung in die Turbineneinläufe zu schwimmen. Je nach Turbinentyp und Fischgröße wird ein Teil der in den Turbinenbereich gelangenden Tiere geschädigt bzw. getötet. Je kleiner die Abstände zwischen den Rechenstäben sind, umso besser werden die Fische zurückgehalten.

Im Zuge der Genehmigungsverfahren für Wasserkraftanlagen werden im Sinne des Fischschutzes oft sehr geringe Rechenabständen gefordert. Je geringer die Rechenabstände sind, umso höher sind jedoch die hydraulischen Verluste und der Aufwand, der zur Reinigung und Instandhaltung der Rechen erforderlich ist.

Typischerweise sind die Rechen an den Einläufen zu den Wasserkraftanlagen stehend angeordnet, d.h. in der frontalen Ansicht verlaufen die Rechenstäbe in vertikaler Richtung. Unter Beachtung der typischen Körperform von Fischen haben sich Rechen mit horizontal verlaufenden Rechenstäben als vorteilhaft erwiesen. Diese kommen bei neuen Wasserkraftanlagen vermehrt zum Einsatz, bedingen jedoch einen nicht unerheblichen Investitions- und Unterhaltsaufwand.

Aus der DE 38 31 099 A1 geht ein Feinrechen hervor, bei dem ein Drahtseil vertikal zwischen zwei Walzen gespannt ist. Es handelt sich dabei nicht um einen Fischschutzseilrechen, insbesondere eignet sich ein solcher Rechen nicht zur Anordnung an einem Einlauf eines Wasserkraftwerks.

In DE 44 13 841 A1 und US 1 739 701 A werden rechenartige Strukturen beschrieben, bei welchen Seile in einen Rahmen gespannt werden, um vergleichsweise geringe Spannweiten zu überwinden Es handelt sich dabei nicht um Fischschutzseilrechen mit gespannten Seilen zum Rückhalt und zur Ableitung von Fischen.

In der US 2008/0298899 A1 wird eine Barriere offenbart, um ein Eindringen von Meereslebewesen durch eine Öffnung zu verhindern. Die Barriere kann ein Netz oder auch ein Sieb umfassen, welches mit einem Trageelement verbunden ist. Das Trageelement kann mittels eines Spann-Mechanismus gespannt werden, wobei an jeder Seite der Öffnung jeweils ein Spann-Mechanismus angeordnet ist, der jeweils als Flaschenzug, Winde oder Winsch ausgebildet sein kann. US 2008/0298899 A1 offenbart den einleitenden Teil der Ansprüche 1 und 10.

Die GB 23489 A beschreibt eine Hafen-Verteidigungsvorrichtung, um in den Hafen eindringende Schiffe, U-Boote oder Torpedos zu zerstören. Ein Netz oder Gitter treibt dabei unterhalb der Wasseroberfläche.

Die US 2010/0242851 A1 offenbart ein System, um Meeressäugetiere davon abzuhalten, Fische zu jagen, die in einem Stellnetz gefangen sind. An dem Stellnetz sind wenigstens zwei Elektroden angebracht. Zwischen diesen Elektroden wird ein elektrisches Feld angelegt. Die Elektroden werden über elektronische Bojen mit Energie versorgt. Das Netz ist dabei an einem Schwimmkörper aufgehängt.

### Offenbarung der Erfindung

Es werden eine Vorrichtung zum Rückhalt und zur Ableitung von Fischen in Wasserkörpern, eine Verwendung einer solchen Vorrichtung in einem Wasserkörper sowie ein Verfahren zum Rückhalten von Fischen in einem Wasserkörper mit den Merkmalen der unabhängigen Patentansprüche 1,9 und 10 vorgeschlagen.

Vorteilhafte Ausgestaltungen sind Gegenstand der Unteransprüche sowie der nachfolgenden Beschreibung.

Durch (im Wesentlichen) parallel gespannte Seile wird eine räumliche Struktur erreicht werden, welche Fische zurückhalten bzw. seitlich ableiten kann. Hierdurch können beispielsweise Fische davon abgehalten werden, in die Einläufe von Wasserkraftanlagen zu schwimmen. Zum Zwecke der Reinigung und im Hochwasserfall werden die Seile auf dem Boden abgelegt.

Die Seile sind während des Betriebs zwischen wenigstens zwei horizontal beabstandeten Widerlagern gespannt, die den abzusichernden Wasserkörper seitlich begrenzen. Der Abstand der Widerlager voneinander richtet sich nach dem abzusichernden Gewässer, wird in der Praxis jedoch regelmäßig mehr als 5 m betragen. Die Widerlager sind vorzugsweise frei stehend, so dass sie sich nicht aneinander abstützen. Die Widerlager sind erfindungsgemäß fest im Untergrund des Wasserkörpers, am Ufer oder an einem Massivbauwerk in einem Flussbett oder Gerinne verankert.

Die zwischen den Widerlagern gespannten Seile verlaufen demnach in einer Richtung, die auch eine horizontale Komponente aufweist, und sie verlaufen vertikal voneinander beabstandet. Der Vertikalabstand der Seile beträgt zweckmäßigerweise nur wenige Zentimeter (weniger als 5 oder 10) und ist damit so klein, dass Fische, deren Körperhöhe den Abstand der Seile übertrifft, vom Durchschwimmen der Vorrichtung abgehalten werden.

Es sei darauf hingewiesen, dass im Rahmen der Erfindung von einer exakten Parallelität und von einem exakt horizontalen Verlauf der Seile abgewichen werden kann.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung , wie durch die Ansprüche definiert, zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

In den Figuren zeigen
- Figur 1: einen Fischschutzseilrechen mit zwischen zwei Widerlagern horizontal gespannten Seilen in einer Normalstellung;
- Figur 2: den Fischschutzseilrechen aus Figur 1 in einer Offenstellung; und
- Figur 3: einen weitergebildeten Fischschutzseilrechen mit zwischen zwei Widerlagern horizontal gespannten Seilstücken mit linearen Lichtelementen in einer Normalstellung.

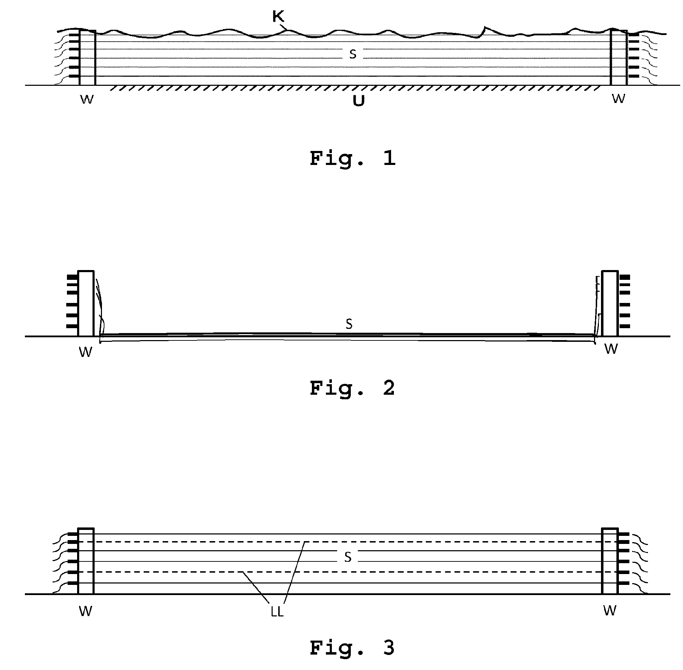

Der Fischschutzseilrechen unterscheidet sich von den bisher verwendeten Rechen durch seine grundsätzliche konstruktive Gestaltung und die Betriebsweise. Die zum Fischschutz erforderliche mechanische Barriere wird durch eine Vielzahl parallel oder im Wesentlichen parallel gespannter Seile S erreicht. Typischerweise werden die Seile zwischen zwei oder mehreren Widerlagern W horizontal gespannt (Fig. 1). Große Spannweiten können so kostengünstig und unter bestmöglicher Ausnutzung der Materialeigenschaften erreicht werden. Jedes einzelne Seil S kann unabhängig von den anderen Seilen S an einem oder mehreren Widerlagern W gespannt und auch abgelegt werden.

Der Fischschutzseilrechen kann durch Ablegen der einzelnen Seile S in einfacher Weise vollständig geöffnet werden (Fig. 2). Dies ist insbesondere bei höheren Abflüssen zur Vermeidung von Verklausungen und schädlichen Wechselwirkungen mit dem Geschiebe von Bedeutung. Auch die Reinigung der Fischschutzseilrechen erfolgt durch das teilweise oder vollständige Legen und anschließende Anspannen der Seile S.

Die Wirkung der Fischschutzseilrechen kann dadurch weiter erhöht werden, dass die Seile S in Schwingung gesetzt werden. Es ist alternativ oder zusätzlich möglich, weitere fischabhaltende Maßnahmen, beispielsweise die Anordnung linearer Lichtelemente LL (Fig. 3), in die Fischschutzseilrechen zu integrieren. Diese Maßnahmen begründen eine Verhaltensbarriere, die auch kleinere Fische vom Durchschwimmen der Vorrichtung abhalten kann.

### Bezugszeichenliste

- W: Widerlager
- S: Seile
- LL: Lineares Lichtelement

## Patentansprüche

1. Vorrichtung, die zum Rückhalt und zur Ableitung von Fischen in Wasserkörpern eingerichtet ist, **dadurch gekennzeichnet, dass** die Vorrichtung parallel verlaufende , untereinander nicht verbundene Seile (S) aufweist, welche unterhalb einer Wasseroberfläche des Wasserkörpers zwischen zwei oder mehreren Widerlagern (W) gespannt sind, wobei die zwei oder mehreren Widerlager (W) während des Normalbetriebs horizontal voneinander beabstandet und fest im Untergrund des Wasserkörpers, am Ufer oder an einem Massivbauwerk verankert sind, wobei der Abstand zwischen den Seilen so klein ist, dass Fische vom Durchschwimmen der Vorrichtung abgehalten werden.

2. Vorrichtung nach Anspruch 1, wobei die Seile (S) während des Normalbetriebs vertikal, vorzugsweise wenige Zentimeter, voneinander beabstandet sind.

3. Vorrichtung nach Anspruch 1 oder 2, wobei die zwei oder mehreren Widerlager (W) während des Normalbetriebs horizontal mehr als fünf Meter voneinander beabstandet sind.

4. Vorrichtung nach Anspruch 3, wobei sich die zwei oder mehreren Widerlager (W) nicht aneinander abstützen.

5. Vorrichtung nach einem der vorstehenden Ansprüche, wobei die Seile (S) an wenigstens einem der zwei oder mehreren Widerlager (W) wiederholt angespannt und entspannt werden können.

6. Vorrichtung nach einem der vorstehenden Ansprüche, wobei die Seile (S) planmäßig zur Schwingung angeregt werden können.

7. Vorrichtung nach einem der vorstehenden Ansprüche, wobei in einzelne Seile (S) lineare Lichtelemente (LL) integriert sind.

8. Vorrichtung nach einem der vorstehenden Ansprüche, die vor einem Einlauf einer Wasserkraftanlage angeordnet ist.

9. Verwendung einer Vorrichtung nach einem der vorstehenden Ansprüche in einem Wasserkörper zum Rückhalt von Fischen.

10. Verfahren zum Rückhalten von Fischen in einem Wasserkörper, **dadurch gekennzeichnet, dass** unterhalb einer Wasseroberfläche des Wasserkörpers Seile (S) vertikal beabstandet und untereinander nicht verbunden zwischen zwei oder mehreren horizontal beabstandeten Widerlagern (W) gespannt werden, wobei der Abstand zwischen den Seilen so bemessen wird, dass die rückzuhaltenden Fische vom Durchschwimmen abgehalten werden.

11. Verfahren nach Anspruch 10, wobei die Seile (S) zum Öffnen entspannt werden.

12. Verfahren nach Anspruch 10 oder 11, wobei die Seile (S) planmäßig zur Schwingung angeregt werden.

13. Verfahren nach Anspruch 10,11 oder 12, wobei die Seile (S) beleuchtet werden.

14. Verfahren nach einem der Ansprüche 10 bis 12, wobei an eines oder mehrere der parallel verlaufenden Seile (S) elektrischer Strom angelegt wird.

## Claims

1. Apparatus configured for holding back and diverting fish in bodies of water, **characterized in that**
the apparatus comprises parallel extending cables (S) not being tied together, which are braced under a water surface of the body of water between two or more abutments (W),
wherein the two or more abutments (W) are spaced horizontally from one another during normal operation and firmly anchored in the substratum of the body of water, on the bank or on a solid structure,
the spacing between the cables being so small that fish are prevented from swimming through the apparatus.

2. Apparatus according to claim 1, wherein the cables (S) are spaced vertically, preferably a few centimetres, from one another during normal operation.

3. Apparatus according to claim 1 or 2, wherein the two or more abutments (W) are spaced horizontally more than five metres from one another during normal operation.

4. Apparatus according to claim 3, wherein the two or more abutments (W) are not supported by one another.

5. Apparatus according to one of the preceding claims, wherein the cables (S) can be repeatedly stretched tight and relaxed at one of the two or more abutments (W) at least.

6. Apparatus according to one of the preceding claims, wherein the cables (S) can be made to vibrate methodically.

7. Apparatus according to one of the preceding claims, wherein linear light elements (LL) are integrated into individual cables (S).

8. Apparatus according to one of the preceding claims, which is arranged in front of an inlet of a hydroelectric installation.

9. Use of an apparatus according to one of the preceding claims in a body of water for holding back fish.

10. Method for holding back fish in a body of water, **characterized in that** cables (S) are braced under a water surface of the body of water at a vertical spacing and not tied together between two or more horizontally spaced abutments (W), the spacing between the cables being such that the fish that are to be held back are prevented from swimming through.

11. Method according to claim 10, wherein the cables (S) are relaxed for opening.

12. Method according to claim 10 or 11, wherein the cables (S) are made to vibrate methodically.

13. Method according to claim 10, 11 or 12, wherein the cables (S) are illuminated.

14. Method according to one of claims 10 to 12, wherein electric current is applied to one or more of the parallel cables (S).

## Revendications

1. Appareil configuré pour retenir et dévier des poissons dans des plans d'eau, **caractérisé en ce que** :
l'appareil comporte des câbles s'étendant parallèlement (S) non attachés les uns aux autres, qui sont en treillis sous une surface d'eau du plan d'eau entre deux ou plus de deux appuis latéraux (W),
dans lequel les deux ou plus de deux appuis latéraux (W) sont espacés horizontalement les uns des autres en fonctionnement normal et fermement ancrés dans le substratum du plan d'eau, sur la berge ou sur une structure solide,
l'espacement entre les câbles étant si petit que les poissons sont empêchés de nager à travers l'appareil.

2. Appareil selon la revendication 1, dans lequel les câbles (S) sont espacés verticalement les uns des autres, de préférence de quelques centimètres, en fonctionnement normal.

3. Appareil selon la revendication 1 ou 2, dans lequel les deux ou plus de deux appuis latéraux (W) sont espacés horizontalement les uns des autres de plus de cinq mètres en fonctionnement normal.

4. Appareil selon la revendication 3, dans lequel les deux ou plus de deux appuis latéraux (W) ne sont pas supportés les uns par les autres.

5. Appareil selon l'une des revendications précédentes, dans lequel les câbles (S) peuvent être tendus et détendus de manière répétée sur l'un des deux ou plus de deux appuis latéraux (W) au moins.

6. Appareil selon l'une des revendications précédentes, dans lequel les câbles (S) peuvent être amenés à vibrer de manière méthodique.

7. Appareil selon l'une des revendications précédentes, dans lequel des éléments d'éclairage linéaires (LL) sont intégrés dans des câbles (S) individuels.

8. Appareil selon l'une des revendications précédentes, qui est agencé devant une entrée d'une installation hydroélectrique.

9. Utilisation d'un appareil selon l'une des revendications précédentes dans un plan d'eau pour retenir les poissons.

10. Procédé pour retenir les poissons dans un plan d'eau, **caractérisé en ce que** des câbles (S) sont en treillis sous une surface d'eau du plan d'eau à un espacement vertical et non attachés ensemble entre deux ou plus de deux appuis latéraux (W) espacées horizontalement, l'espacement entre les câbles étant tel que les poissons à retenir sont empêchés de nager à travers ceux-ci.

11. Procédé selon la revendication 10, dans lequel les câbles (S) sont détendus pour l'ouverture.

12. Procédé selon la revendication 10 ou 11, dans lequel les câbles (S) sont amenés à vibrer de manière méthodique.

13. Procédé selon la revendication 10, 11 ou 12, dans lequel les câbles (S) sont éclairés.

14. Procédé selon l'une des revendications 10 à 12, dans lequel du courant électrique est appliqué à un ou plusieurs des câbles parallèles (S).
